# EUROPEAN PATENT APPLICATION

(11) **EP 1 920 671 A2**
(43) Date of publication of application: **14.05.2008**
(21) Application number: 07425683.5
(22) Date of filing: 30.10.2007
(51) Int. Cl.: A43B 17/02, B29D 31/518

(54) **Method for realising a shoe sole and sole manufactured by said method**

(30) Priority: 10.11.2006 IT RM20060610
(71) Applicant: SSL Healthcare Italia S.p.A., 40132 Bologna (IT)
(72) Inventor: Veneziani, Roberto, 41032 Bologna (IT)
(74) Representative: Iannone, Carlo Luigi

(57) **Abstract**

The present invention relates to a method for realising a shoe sole (1), said sole (1) comprising a support base (2), that can be placed within the inner sole of said shoe, and at least a relief (4) comprised of gel, that can be fixed with respect to said support base (2) so as to interpose between the same and the user foot sole, said at least one relief (4) dampening impacts on foot while the user is walking, said method comprising the following steps:
a) placing at least one intermediate layer (3, 3') within a mould for said at least one relief (4);
b) introducing said gel within the mould at the melt temperature;
c) cooling said gel so as to obtain a uniform coupling all along the contact surface between said at least one relief and said intermediate layer (3, 3'); and
d) coupling said first layer (3) with said support base (2).

The present invention also relates to a sole (1) manufactured by said method.

## Description

The present invention relates to a method for realising a shoe sole and to a sole manufactured by said product.

More specifically, the invention relates to a method for production of soles that can be applied to every kind of shoe, particularly studied and realised for working shoes, permitting obtaining a very pleasant and comfortable product.

As it is well known, much kind of uses oblige the user to stand up or to walk for very long periods. For example a dealer, e.g. a pharmacist, standing up for hours. It is known that it involves drawbacks at the end of the working day, such as feet swelling, tiredness, ankle pain or tendon inflammation.

Different shoes are presently available on the market suitable to persons walking or standing up for a long time. These shoes are for example characterised by the use or transpiring materials or by plantar shapes suitable to reduce tiredness.

Moreover, soles are available on the market having zones in correspondence of the foot sole where a kind of element or relief is placed dampening in correspondence of the foot resting points, such as heel. In this case, said relieves are called "little heels". They permit dampening shock on heel occurring while walking.

An example of this kind of soles is the one described in EP patent application n° 1166671. A sole is described in this document providing a gel relief in correspondence of the heel portion as dampening element. A concave space in said sole is suitable to house the gel relief. In order to have a better comfort, a stabilisation reinforce is fixed under the heel portion. Said reinforce provides lateral walls slightly inclined.

Known products provide that gel relief is glued to the sole. Said gel relieves are substantially transparent, gluing between sole and relief is clearly visible. It makes unpleasant the aesthetic appearance of the sole, mainly when it is displayed in shops, pharmacies and similar transparent containers.

Furthermore, it has been noted that glue coupling between relief and sole is not very efficient and lasting.

In view of the above, it is object of the present invention that of suggesting a method for realising a sole that can be adapted to every kind of shoe, such as shoes, boots, slippers, clogs, and particularly useful for working shoes, overcoming the aesthetical and functional drawbacks of the above described shoes.

It is further object of the present invention that of suggesting a sole permitting a more comfortable walking, suitable to cushioning shock on heel while walking.

It is therefore specific object of the present invention a method for realising a shoe sole, said sole comprising a support base, that can be placed within the inner sole of said shoe, and at least a relief comprised of gel, that can be fixed with respect to said support base so as to interposing between the same and the user foot sole, said at least one relief dampening impacts on foot while the user is walking, said method comprising the following steps:
a) placing at least one intermediate layer within a mould for said at least one relief;
b) introducing said gel within the mould at the melt temperature;
c) cooling said gel so as to obtain a uniform coupling all along the contact surface between said at least one relief and said intermediate layer; and
d) coupling said first layer with said support base.

Always according to the invention, said at least one relief is suitable to be placed in correspondence of the heel rest surface of said sole.

Still according to the invention, during step (a), said gel can be contained within a mould.

Furthermore, according to the invention, said gel can be of the polyurethanic kind.

Advantageously, according to the invention, said at least one intermediate layer comprises a first layer that can be coupled with said support base, having the surface of said sole, and a second layer coupable with said at least a relief and with said first layer.

Preferably, according to the invention, said first layer and said second layer can be coupled by gluing.

Furthermore, according to the invention, coupling in step (d) between said first layer and said support base can be made by gluing.

It is further object of the present invention a shoe sole comprising a support base, that can be placed within the inner sole of said shoe; and at least a relief comprised of gel that can be fixed with respect to said support base so as to interpose between the same and the user sole foot, said at least one relief dampening impacts on foot during user walking; said sole being characterised in that it comprises at least an intermediate layer coupled with said at least a gel relief at the melt temperature, so as to realise a uniform coupling all along the contact surface, and with said base by gluing.

Always according to the invention, said at least one relief can be placed in correspondence of the heel resting surface of said sole.

Still according to the invention, said at least one relief can have an anatomical shape.

Furthermore, according to the invention, said at least one intermediate layer can comprise a first layer that can be coupled with said support base, with the surface of the whole sole, and a second layer that can be coupled with said at least one relief and with said first layer.

Advantageously, according to the invention, said first and said second layer can be comprised of tissue.

Always according to the invention, said first and said second layer can be comprised of cork.

Still according to the invention, said support base can be thermo-shaped, and provided with a notch in correspondence of the heel resting area, suitable to permit a better anatomical conformation of said sole.

Furthermore, according to the invention, said support base can be provided behind with a bent lateral wall suitable to contain the user foot.

Advantageously, according to the invention, said support base can be comprised of ethylene vinyl acetate (EVA).

The present invention will be now described, for illustrative but not limitative purposes, according to its preferred embodiments, with particular reference to the figures of the enclosed drawings, wherein:
figure 1 shows an exploded perspective view of a first embodiment of a shoe sole according to the invention;
figure 2 shows a plan view of the sole according to the invention; and
figure 3 shows a perspective view of a second embodiment of the shoe sole according to the invention.

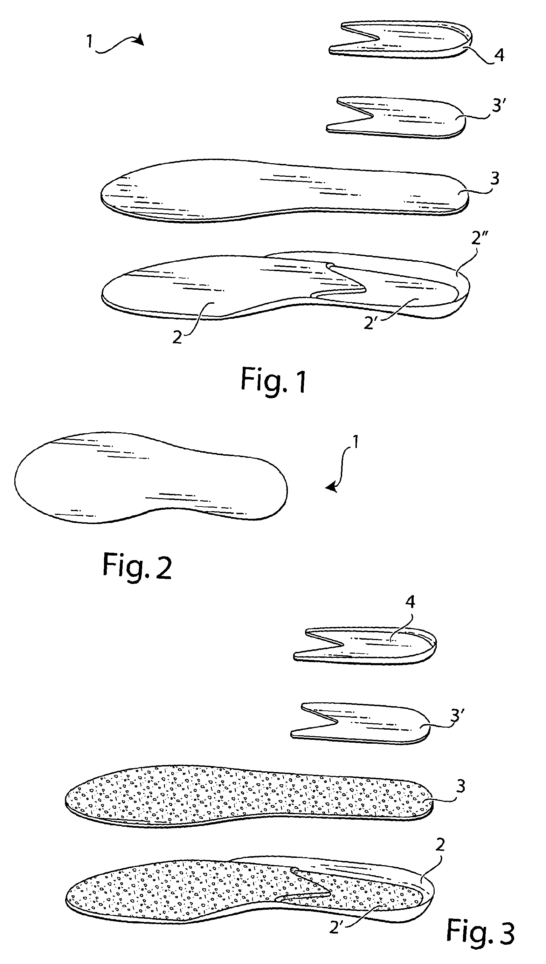

Making reference to figures 1 and 2, it is possible observing assembling of an improved shoe sole 1 according to the invention.

It is noted that sole 1 of the shown embodiment comprises a support base 2 suitable to be placed on the shoe plan.

A first tissue layer 3 and, in correspondence of the resting area of the sole 1 heel, a second tissue layer 3', glued to said first tissue layer 3, are glued on said support base 2.

Finally, sole 1 comprises a relief 4 coupled with said layer 3', so as to be placed with respect to the sole 1 in correspondence of the heel resting area.

Said relief 4 has an anatomical shape suitable to the foot heel. Furthermore, it is made up of gel and as already descried it permits:
- cushioning shock on heel while walking; and
- quick return to the original dimensions after compression.

Obviously, said relief can be placed in a plurality of the sole 1 and even extended to the whole surface of the same.

Coupling of said relief 4 with said second tissue layer 3' occurs during formation of the same relief 4. particularly, said second layer 3' is placed within the mould for realising the relief 4. then, gel is poured melt and let cooling.

Once gel is cooled, a uniform coupling is present between said relief 4 and said second layer 3', all along the contact surface thanks to the gel properties. Thus, no defect can be observed through the transparency.

For completeness, it must be considered that said relief 4 can also be coupled directly to said first layer 3.

Once realised the coupling between said relief 4 and said second layer 3' or directly with said first layer 3, said first layer 3 is glued on said support base 2.

Thus, process for making the sole 1 mainly comprises the following steps:
a) placing at least one intermediate layer (3, 3') within a mould to confer to said at least one relief (4) a suitable shape;
b) introducing gel necessary for realising said relief 4 within the mould at the melt temperature so as to be able to shape the same;
c) cooling said gel so as to obtain a uniform coupling all along the contact surface between said relief 4 and said first or second layer 3, 3'; and
d) coupling said first layer 3 with said support base 2 by gluing.

Support base 2 is preferably comprised of thermo shaped ethylene vinyl acetate (EVA), but it can be also comprised of different materials.

Gel that can be used is preferably a polyurethanic gel.

Said support base 2 also has a notch 2' suitable to permit a better anatomical conformation of the sole 1.

Finally, said support base 2 is provided behind with a curved lateral wall 2", permitting to better conform the sole to the specific shoe and to better contain the foot.

Making now reference to figure 3, it is possible observing a second embodiment of the present invention, wherein said first 3 and second 3' layers are comprised of cork, so as to ensure a better insulation effect.

On the basis of the previous specification, it can be noted that main advantage of the present invention is that of permitting application of a relief suitable to dampen shocks on foot and particularly on the heel while walking, maintaining a high aesthetical quality and a high comfort.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for realising a shoe sole (1), said sole (1) comprising a support base (2), that can be placed within the inner sole of said shoe, and at least a relief (4) comprised of gel, that can be fixed with respect to said support base (2) so as to interpose between the same and the user foot sole, said at least one relief (4) dampening impacts on foot while the user is walking, said method comprising the following steps:
a) placing at least one intermediate layer (3, 3') within a mould for said at least one relief (4);
b) introducing said gel within the mould at the melt temperature;
c) cooling said gel so as to obtain a uniform coupling all along the contact surface between said at least one relief and said intermediate layer (3, 3'); and
d) coupling said first layer (3) with said support base (2).

2. Method according to claim 1, **characterised in that** said at least one relief (4) is suitable to be placed in correspondence of the heel rest surface of said sole (1).

3. Method according to one of the preceding claims, **characterised in that** during step (a), said gel is contained within a mould.

4. Method according to one of the preceding claims, **characterised in that** said gel is of the polyurethanic kind.

5. Method according to one of the preceding claims, **characterised in that** said at least one intermediate layer comprises a first layer (3) that can be coupled with said support base (2), having the surface of said sole (1), and a second layer (3') coupable with said at least a relief (4) and with said first layer (3).

6. Method according to claim 5, **characterised in that** said first layer (3) and said second layer (3) are coupled by gluing.

7. Method according to one of the preceding claims, **characterised in that** coupling in step (d) between said first layer (3) and said support base (2) is made by gluing.

8. Shoe sole (1) comprising a support base (2), that can be placed within the inner sole of said shoe; and at least a relief (4) comprised of gel that can be fixed with respect to said support base (2) so as to interpose between the same and the user sole foot, said at least one relief (4) dampening impacts on foot during user walking; said sole (1) being **characterised in that** it comprises at least an intermediate layer (3, 3') coupled with said at least a gel relief (4) at the melt temperature, so as to realise a uniform coupling all along the contact surface, and with said base (2) by gluing.

9. Sole (1) according to claim 8, **characterised in that** said at least one relief (4) is placed in correspondence of the heel resting surface of said sole (1).

10. Sole (1) according to one of claims 8 and 9, **characterised in that** said at least one relief has an anatomical shape.

11. Sole (1) according to one of claims 8 - 10, **characterised in that** said gel is of the polyurethanic kind.

12. Sole (1) according to one of claims 8 - 11, **characterised in that** said at least one intermediate layer (3, 3') comprises a first layer (3) that can be coupled with said support base (2), with the surface of the whole sole (1), and a second layer (3') that can be coupled with said at least one relief (4) and with said first layer (3).

13. Sole (1) according to claim 12, **characterised in that** said first and said second layer (3, 3') are comprised of tissue.

14. Sole (1) according to claim 12, **characterised in that** said first and said second layer (3, 3') are comprised of cork.

15. Sole (1) according to one of claims 8 - 14, **characterised in that** said support base (2) is thermo-shaped.

16. Sole (1) according to one of claims 8 - 15, **characterised in that**, said support base (2) is provided with a notch (2') in correspondence of the heel resting area, suitable to permit a better anatomical conformation of said sole (1).

17. Sole (1) according to one of claims 8 - 16, **characterised in that** said support base (1) is provided behind with a bent lateral wall (2") suitable to contain the user foot.

18. Sole (1) according to one of claims 8 - 17, **characterised in that** said support base (2) is comprised of ethylene vinyl acetate (EVA).

19. Method and sole (1) according to each one of the preceding claims, substantially as illustrated and described.
